# EUROPEAN PATENT APPLICATION

(11) **EP 2 530 251 A2**
(43) Date of publication of application: **05.12.2012**
(21) Application number: 12169888.0
(22) Date of filing: 29.05.2012
(51) Int. Cl.: F01D 11/00, F16J 15/08

(54) **Hinge seal**

(30) Priority: 03.06.2011 US 201113152604
(71) Applicant: General Electric Company, Schenectady, NY 12345 (US)
(72) Inventor: Giri, Sheo Narain, 560066 Bangalore, Karnataka (IN)
(74) Representative: Cleary, Fidelma

(57) **Abstract**

A hinge seal (10) is provided and includes a first section (20), a second section (40) and a hinge section (60) connected at opposite end portions (61, 62) thereof to the first and second sections (20, 40) and having a central piano hinge portion (70) extending between the opposite end portions (61, 62) to absorb differential thermal growth of vessels to which the first and second sections (20, 40) are coupled.

## Description

### BACKGROUND OF THE INVENTION

The subject matter disclosed herein relates to a hinge seal.

In gas turbine engines, combustion occurs in a combustor and the high temperature and high energy fluids produced by that combustion are directed to flow from the combustor into a transition piece and toward a turbine section. The transition piece and the turbine section are normally coupled to one another at the aft frame of the transition piece and the stage 1 nozzle. This coupling can be achieved by advanced cloth seals.

During turbine operations and transient cycles in particular, the transition piece and the stage 1 nozzle may experience differential axial and radial deformation that affects several components including the seals between the transition piece and the stage 1 nozzle. In fact, field experience has revealed that the stage 1 nozzle tends to creep and due to nozzle creep deflection, seal effectiveness decreases. This decreased seal effectiveness in turn results in cooling air leakage to the primary flow path causing performance loss.

### BRIEF DESCRIPTION OF THE INVENTION

According to one aspect, the invention resides in a hinge seal including a first section, a second section and a hinge section connected at opposite end portions thereof to the first and second sections and having a central piano hinge portion extending between the opposite end portions to absorb differential thermal growth of vessels to which the first and second sections are coupled. The first section may be coupled to a first vessel, and the second section may be coupled to a second vessel, the central piano hinge portion being arranged to absorb at least one of radial, circumferential and axial differential thermal growth of the first and second vessels.

### BRIEF DESCRIPTION OF THE DRAWING

Embodiments of the present invention will now be described, by way of example only, with reference to the accompanying drawings in which:
FIG. 1 is a side view of a hinge seal in accordance with embodiments;
FIG. 2 is a side view of a hinge seal in accordance with alternative embodiments;
FIG. 3 is a side view of a hinge seal in accordance with alternative embodiments;
FIG. 4 is an enlarged perspective view of the hinge seal of FIGS. 1, 2 and 3; and
FIG. 5 is another enlarged perspective view of the hinge seal of FIGS. 1, 2 and 3.

The detailed description explains embodiments of the invention, together with advantages and features, by way of example with reference to the drawings.

### DETAILED DESCRIPTION OF THE INVENTION

In accordance with aspects, a hinge seal provides cost effective and rugged design to improve sealing effectiveness in at least the transient environment. The hinge seal shows prompt thermal response and, due to temperature changes, the hinge seal flexes to provide ample room for deformation with fixed or substantially fixed transition piece and stage 1 nozzle end constraints. As will be discussed below, the hinge seal can be assembled with the transition piece and stage 1 nozzle using screw/bolt fasteners to ensure metal to metal contact or other similar arrangements.

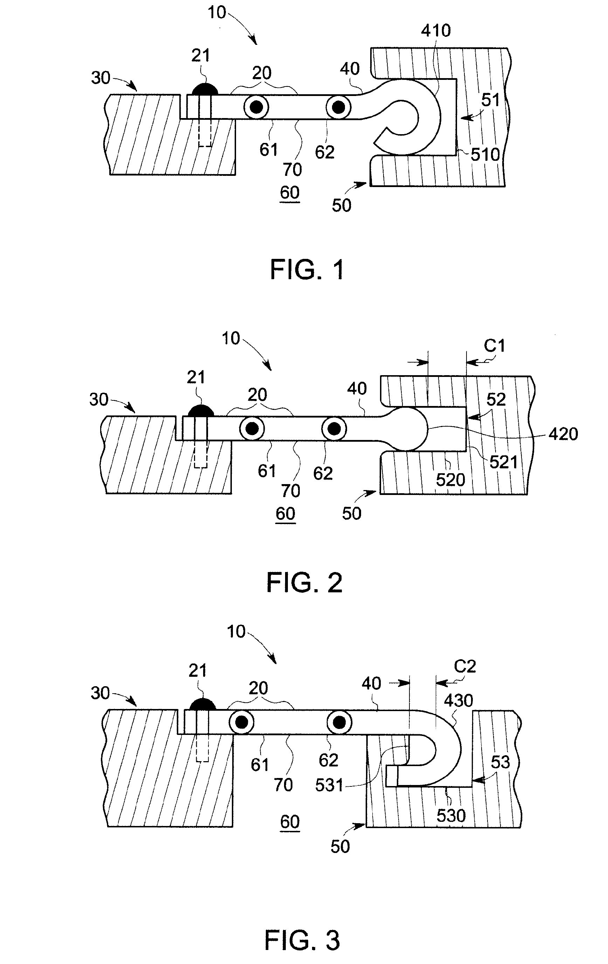

With reference to FIGS. 1-3, a hinge seal 10 is provided. The seal 10 includes a first section 20, which is coupled to a first vessel 30 of, for example, a gas turbine engine, a second section 40, which is coupled to a second vessel 50 of the exemplary gas turbine engine, which is disposed downstream from the first vessel 30, and a hinge section 60. In accordance with embodiments, the first vessel 30 may include a transition piece of the exemplary gas turbine engine and the second vessel 50 may include a stage 1 nozzle. In these cases, the first section 20 is coupled to an aft frame of the transition piece and the second section 40 is coupled to a side wall of the stage 1 nozzle. However, it is to be understood that the seal 10 can be applied to any components of the gas turbine engine or another similar apparatus.

The hinge section 60 has opposite end portions 61 and 62 and is connected at the opposite end portions 61 and 62 to the first and second sections 20 and 40, respectively. The hinge section 60 further includes a central, piano hinge portion 70 extending between the opposite end portions 61 and 62. The piano hinge portion 70 flexes to responsively absorb torsion forces applied to the first and second sections 20 and 40 by the first and second vessels 30 and 50 in accordance with at least one or more of radial, circumferential and axial differential thermal growth of the first and second vessels 30 and 50.

That is, as temperatures within the exemplary gas turbine engine increase and the first and second vessels 30 and 50 experience for example thermal expansion, one or both of the first and second vessels 30 and 50 may translate relative to the other. This relative translation causes one or both of the first and second vessels 30 and 50 to push and/or pull on the first and second sections 20 and 40 in various directions. This pushing and/or pulling is absorbed by the hinge section 60 whereby the piano hinge portion 70 flexes, curves and/or flattens. As such, an effective overall length of the seal 10 from end to end is decreased or increased such that the relative translation can be absorbed.

As shown in FIGS. 1-3, the first section 20 may be coupled to the first vessel 30 by an end 21 thereof being fastened to the first vessel 30 and the second section 40 may be coupled to the second vessel 50 in various manners to be able to grow axially. For example, as shown in FIG. 1, the second section 40 may be formed in a C-shaped end 410 and preloaded in a slot 51 of the second vessel 50 whereby slot walls 510 ensure positive sealing with the C-shaped end 410 and the C-shaped end 410 allows for additional rotation over that provided by the piano hinge portion 70. As another example, as shown in FIG. 2, the second section 40 may be formed in a dogbone-shaped end 420 and preloaded in a slot 52 of the second vessel 50 whereby slot walls 520, 521 ensure positive sealing with the dogbone-shaped end 420 with clearance C1 and the dogbone-shaped end 420 allows for additional rotation over that provided by the piano hinge portion 70. As yet another example, as shown in FIG. 2, the second section 40 may be formed in a partial C-shaped end 430 and preloaded in a slot 53 of the second vessel 50 whereby slot walls 530, 531 ensure positive sealing with the partial C-shaped end 430 with clearance C2 and the partial C-shaped end 430 allows for additional rotation over that provided by the piano hinge portion 70

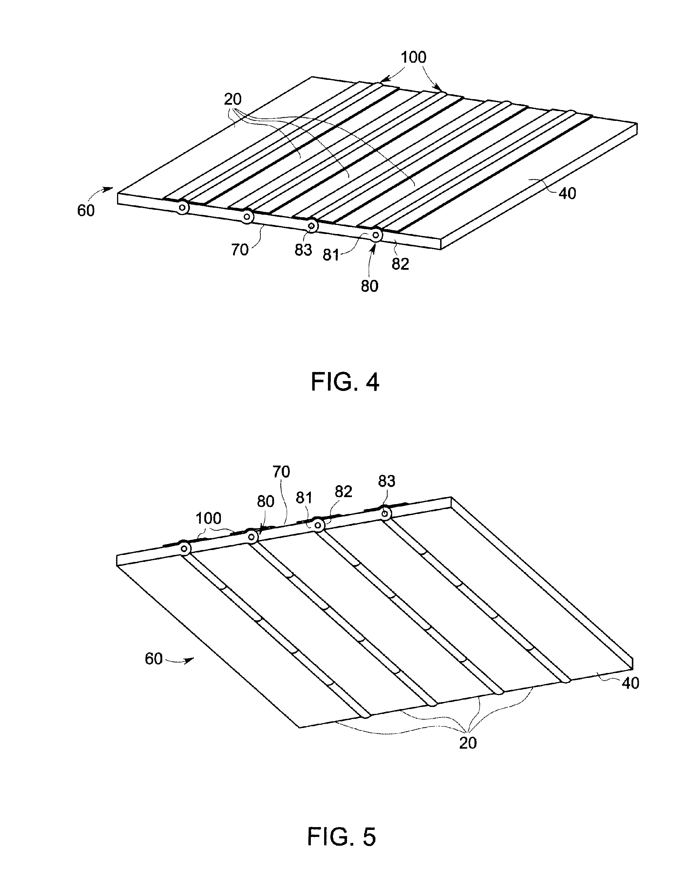

With reference to FIGS. 4 and 5, the first and second sections 20 and 40 may have different lengths or substantially similar lengths and, at least at an initial time prior to any at least one of radial, axial and circumferential differential thermal growth of the first and second vessels 30 and 50, the first and second sections 20 and 40 are oriented substantially in parallel with one another. In some cases, the first and second sections 20 and 40 may be coplanar and/or coaxial. At least at an initial time prior to any at least one of radial, axial and circumferential differential thermal growth of the first and second vessels 30 and 50, the piano hinge portion 70 may be coplanar and/or coaxial with the first and second sections 20 and 40. However, following the at least one of radial, axial and circumferential differential thermal growth of the first and second vessels 30 and 50, the piano hinge portion 70 may fold radially inwardly, radially outwardly or radially inwardly and radially outwardly depending on a number of joints provided therein. It is to be understood that, in accordance with alternative embodiments, the piano hinge portion 70 may also be folded radially inwardly, radially outwardly or radially inwardly and radially outwardly depending on a number of joints provided therein prior to at least one of radial, axial and circumferential differential thermal growth. In these cases, the at least one of radial, axial and circumferential differential thermal growth is absorbed by the folding of the piano hinge portion 70 being increased or decreased.

As shown in FIGS. 4 and 5 and, in accordance with an exemplary embodiment, the piano hinge portion 70 of the hinge section 60 may be formed of four seal pieces of first section 20 and one seal piece of second section 40. Each interior seal piece is adjacent to two neighboring seal pieces and includes a head 81 and a tail 82 that are rotatably coupled to one another at opposing complementary ends thereof such that rotation is permitted about pin 83, which extends through both the head 81 and the tail 82. The bookend seals are similarly constructed except they may only include a head 81 or a tail 82. The piano hinge portion 70 may further include an additional seal piece 100 that can be at least one of welded and screwed or otherwise attached or fastened to the piano hinge portion 70 proximate to the pin 83 locations to reduce leakage. The additional seal piece 100 may be thinly formed relative to a thickness of the piano hinge portion 70 and may be formed of at least one or more of metal, metallic alloy and cloth.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A hinge seal (10), comprising:
a first section (20);
a second section (40); and
a hinge section (60) connected at opposite end portions (61, 62) thereof to the first and second sections (20, 40) and having a central piano hinge portion (70) extending between the opposite end portions (61, 62) to absorb differential thermal growth of vessels to which the first and second sections (20, 40) are coupled.

2. The hinge seal (10) according to claim 1, wherein the vessels each comprise a component of a gas turbine engine.

3. The hinge seal (10) according to claim 1 or 2, wherein the piano hinge portion (70) comprises:
at least two seal pieces (81, 82) rotatably coupled to one another at opposing complementary ends thereof; and
at least one pin (83) extending through the opposing complementary ends of the at least two seal pieces (81, 82).

4. The hinge seal (10) according to claim 3, wherein the piano hinge portion (70) further comprises at least one additional seal piece (100) fastened proximate to a location of the at least one pin (83) to prevent leakage.

5. The hinge seal (10) according to claim 4, wherein the at least one additional seal piece (100) comprises at least one of metal, metallic alloy and cloth.

6. The hinge seal (10), of any of claims 1 to 5, wherein a first section (20) is coupled to the first vessel (30) and the second section (40) is coupled to a second vessel (50); and
wherein the central piano hinge portion (70) is arranged to absorb at least one of radial, circumferential and axial differential thermal growth of the first and second vessels (30, 50).

7. The hinge seal (10) according to claim 6, wherein the second section (40) has a C-shaped end (410) and is preloaded in a slot (51) of the second vessel (50).

8. The hinge seal according to claim 6, wherein the second section (40) has a dogbone-shaped end (420) and is preloaded in a slot (51) of the second vessel (50).

9. The hinge seal according to claim 6, wherein the second section (40) has a partial C-shaped end (430) and is preloaded in a slot (51) of the second vessel (50).
